(19) **Europäisches Patentamt**

**European Patent Office**

**Office européen des brevets**

(11) Veröffentlichungsnummer: **0 122 385**
**B1**

# (12) EUROPÄISCHE PATENTSCHRIFT

(45) Veröffentlichungstag der Patentschrift:
07.01.87

(51) Int. Cl.⁴: **G 02 B 21/00, G 02 B 7/24**

(21) Anmeldenummer: **84101418.6**

(22) Anmeldetag: **11.02.84**

(54) **Mikroskoptubus.**

(30) Priorität: **18.02.83 DE 3305650**

(43) Veröffentlichungstag der Anmeldung:
**24.10.84 Patentblatt 84/43**

(45) Bekanntmachung des Hinweises auf die Patenterteilung:
**07.01.87 Patentblatt 87/2**

(84) Benannte Vertragsstaaten:
**AT CH DE GB LI**

(56) Entgegenhaltungen:
**DE - A - 2 754 614**
**DE - A - 3 127 990**
**DE - B - 1 210 204**
**DE - U - 7 931 427**

(73) Patentinhaber: **Firma Carl Zeiss, D-7920 Heidenheim (Brenz) (DE)**

(84) Benannte Vertragsstaaten: **AT CH DE GB LI**

(73) Patentinhaber: **CARL-ZEISS-STIFTUNG trading as CARL ZEISS, D-7920 Heidenheim (Brenz) (DE)**

(84) Benannte Vertragsstaaten: **GB**

(72) Erfinder: **Westphal, Klaus, Heckenrosenweg 34, D-7082 Oberkochen (DE)**

ACTORUM AG

## Beschreibung

Die Erfindung betrifft einen Mikroskoptubus mit einem Gelenk zur Einstellung der Höhe bzw. des Einblickwinkels des Okularansatzes.

Es sind bereits seit langem Mikroskope bekannt, deren Tuben ein Verstellen der Okulare gestatten und damit dem Benutzer den erhöhten Komfort eines in der Höhe oder im Winkel verstellbaren Einblicks bieten.

So ist in der US-A-2 439 526 ein Mikroskop beschrieben, dessen Okular selbst schwenkbar am Mikroskoptubus befestigt ist und eine Variation des Einblickwinkels in einem Bereich zwischen ca. 60° und 90° gestattet.

In der DE-B-1 098 233 ist ein Binokulartubus für Mikroskope beschrieben, der schwenkbar mit dem Mikroskoptubus verbunden ist und eine Höhenverstellung des Okulareinblickes erlauben soll. Auch bei diesem Tubus befindet sich die Schwenkachse unmittelbar hinter den Okularen, so dass die beabsichtigte Höhenverstellung zwangsweise mit einer Änderung des Einblickwinkels verbunden ist.

Aus dem DE-U-7 931 427 ist ein Mikroskopzwischentubus mit Höhenverstellung bekannt, dessen Schwenkachse relativ weit vom Betrachter weg verlagert ist und bei dem deshalb eine nur geringe Änderung des Einblickwinkels im Zuge der Höhenverstellung stattfindet. Dennoch sind aber auch bei diesem bekannten schwenkbaren Tubus ebenso wie bei den erstgenannten Geräten die Verstellbewegungen von Höhe und Einblickwinkel nicht unabhängig voneinander.

Aus ergonomischen Gründen sollten die beiden Bewegungen jedoch entkoppelt sein, da sie einerseits zu einer Anpassung an die Grösse und andererseits zur Anpassung an die Kopfhaltung des Benutzers benötigt werden und Grösse und Kopfhaltung ebenfalls voneinander unabhängig sind.

Ausserdem bietet keiner der bekannten schwenkbaren Mikroskoptuben die Möglichkeit einer Verstellung der Okulare in die Tiefe. Eine solche Verstellmöglichkeit wäre jedoch bei länger dauernden Arbeiten mit dem Mikroskop von Vorteil, da sie ein Wechseln der Sitzposition des Beobachters erleichtern und damit zu einem ermüdungsfreien Arbeiten beitragen würde.

Es ist die Aufgabe der vorliegenden Erfindung einen unter ergonomischen Gesichtspunkten verbesserten Mikroskoptubus zu schaffen, der neben der Höhenverstellung auch eine Tiefenverstellung der Okulare erlaubt und bei dem die Einstellbewegungen möglichst weitgehend voneinander entkoppelt sind.

Diese Aufgabe wird gemäss dem Kennzeichen des Hauptanspruches dadurch gelöst, dass der Tubus einen kranartigen Aufbau besitzt mit einem im wesentlichen waagerechten bzw. leicht gegen die Horizontale geneigten Ausleger, der um das erste, zur Höhenverstellung dienende Gelenk schwenkbar ist, dass ein im wesentlichen senkrecht bzw. leicht gegen die Vertikale geneigter Tragarm um ein zweites, zur Tiefenverstellung dienendes Gelenk schwenkbar am Ausleger befestigt ist, dessen Achse parallel zur Achse des ersten Gelenks angeordnet und im wesentlichen um die Länge des Auslegers gegenüber dem ersten Gelenk versetzt ist und der im Tubus geführte Strahlengang über beide Gelenke gefaltet ist.

Zweckmässigerweise ist der Okularansatz des Mikroskoptubus um ein drittes Gelenk schwenkbar am Tragarm befestigt.

Durch diesen Aufbau ist sichergestellt, dass alle drei Einstellungen des Tubus, nämlich Höhe, Tiefe und Einblickwinkel voneinander unabhängig vorgenommen werden können. Weiterhin ist es vorteilhaft, wenn die drei Gelenke über ein parallelogrammartiges Lenkergetriebe nach Art der bei Zeichenbrettern zur Führung des Lineals verwendeten Getriebe miteinander verbunden sind. Bei einer solchen Ausbildung des Tubus kann der Okularansatz beliebig nach Höhe und Tiefe verstellt werden, ohne dass sich der Einblickwinkel unbeabsichtigt mit verändert.

Ansätze zur Ausspiegelung des Strahlenganges in Zusatzeinrichtungen wie Photoapparate, Fernsehkameras, Projektionsschirme o.ä. oder zur Einspiegelung z.B. eines Lichtzeigers sind zweckmässig am feststehenden Teil des Tubus angeordnet.

Zur Führung des Strahlenganges über die Gelenke des Tubus können in bekannter Weise Spiegel verwendet werden, deren Oberfläche in der Schwenkachse liegt und die jeweils mit einem Getriebe zur Reduzierung der Schwenkbewegung um den halben Winkel gekoppelt sind. Natürlich ist es statt dessen auch möglich die Gelenke nach Art des z.B. in der DE-A-2 502 209 beschriebenen Aufbaues auszubilden.

Weiterhin ist es vorteilhaft, wenn der Tubus eine zwischenabbildende Optik enthält, durch die u.a. eine Aufrichtung des mikroskopischen Bildes bewirkt wird.

Nachfolgend wird ein Ausführungsbeispiel der vorliegenden Erfindung anhand der Fig. 1-5 der beigefügten Zeichnungen näher erläutert.

Fig. 1 zeigt eine perspektivische Gesamtansicht des erfindungsgemässen Tubus;

Fig. 2 ist eine Schnittzeichnung des Tubus aus Fig. 1 in einer die optische Achse enthaltenden Ebene;

Fig. 3 ist ein Teilschnitt durch das erste Gelenk 12 längs der Linie III-III in Fig. 2;

Fig. 4 ist ein Teilschnitt durch das zweite Gelenk 23 längs der Linie IV-IV in Fig. 2;

Fig. 5 ist ein Teilschnitt durch das dritte Gelenk 34 längs der Linie V-V in Fig. 2.

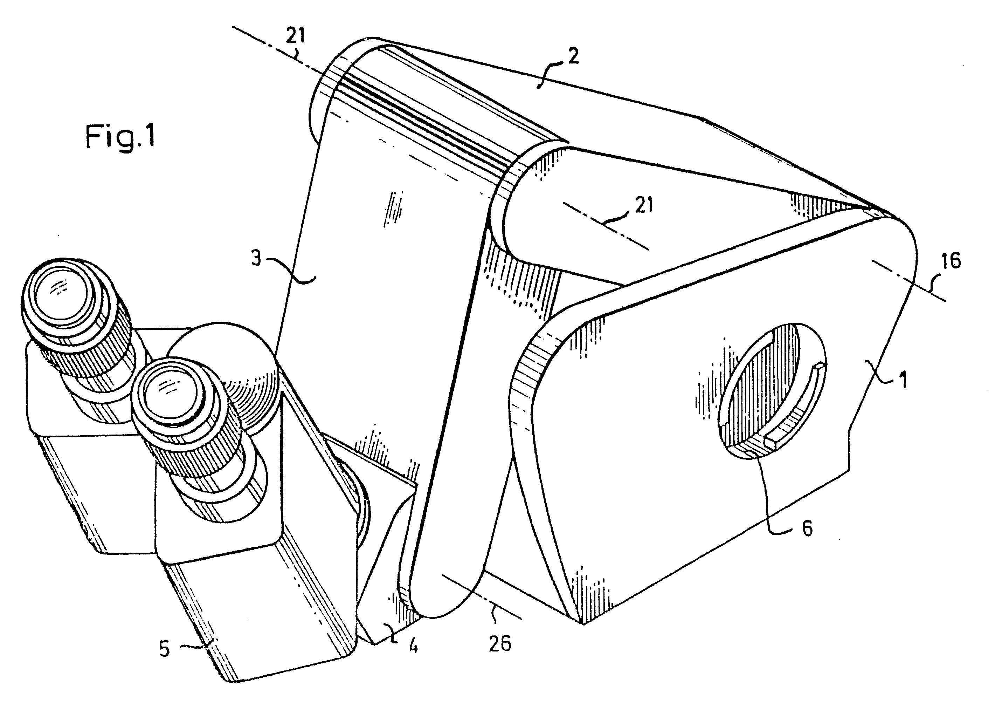

Der in Fig. 1 dargestellte Tubus besitzt ein feststehendes Gehäuseteil 1, das auf dem Stativ eines aufrechten Mikroskops befestigt werden kann. An diesem Gehäuseteil 1 ist ein sich im wesentlichen horizontal erstreckender Ausleger 2 um eine auf der dem Benutzer abgewandten Seite des Teils 1 angeordnete, waagerechte Achse 16 schwenkbar gelagert. Am freien Ende dieses Auslegers 2 ist ein um die ebenfalls horizontale Achse 21 schwenkbar gelagerter Tragarm 3 befestigt, der sich vor dem feststehenden Tubusteil 1 nach unten erstreckt. An dem Tragarm 3 hängt wiederum um eine horizontale Achse 26 schwenkbar ein Okularansatz 4, an dem abnehmbar ein herkömmlicher Binokulartubus 5 angesetzt ist.

Über eine Bajonettaufnahme 6 kann am feststehenden Tubusteil 1 ein Zusatzgerät z.B. eine Kamera angeschlossen werden. Bei Nichtgebrauch ist dieser Ausgang durch eine Abdeckung verschlossen. Nicht sichtbar ist eine zweite Bajonettaufnahme, die sich auf der gegenüberliegenden Seite des Tubusteils 1 befindet.

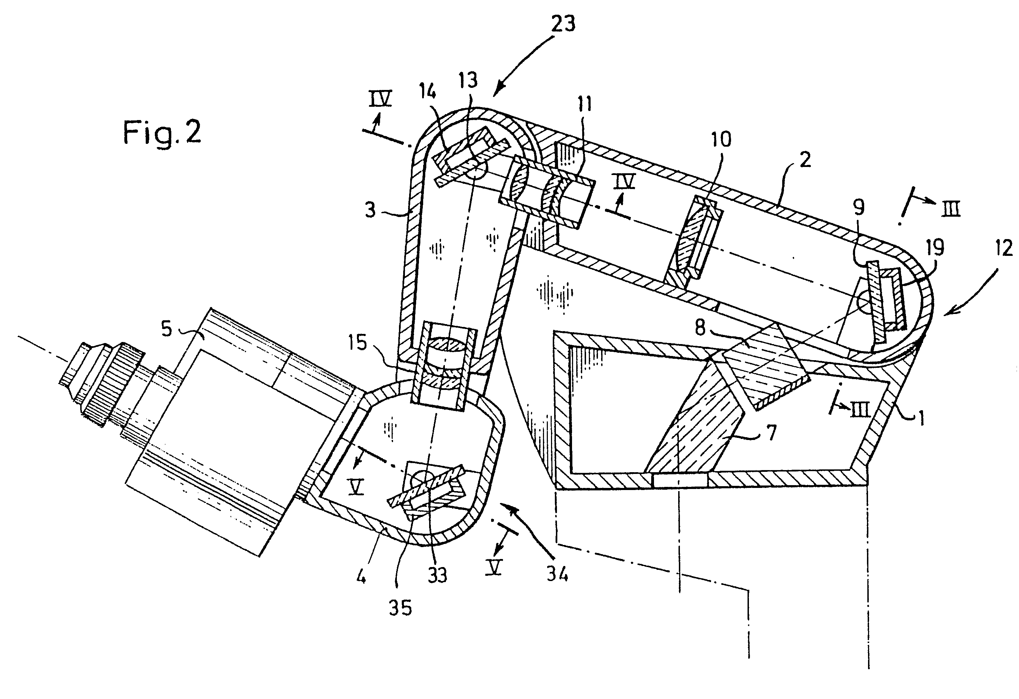

Wie Fig. 2 zeigt, ist der mikroskopische Strahlengang im Inneren der gelenkig miteinander verbundenen Tubusteile 1-4 zu den Okularen geführt. Das vom nicht dargestellten, am Stativ des Mikroskops befestigten Objektiv kommende Beobachtungsstrahlenbündel wird von der Reflexionsfläche eines im Tubusteil 1 befestigten Trapezprismas 7 vom Betrachter weg in Richtung auf die Achse 16 des ersten Gelenks 12 reflektiert.

Dort trifft das Bündel auf einen Spiegel 9, der es in Richtung auf die Achse 21 des nächsten, am Ende des Auslegers 2 angeordneten Gelenks 23 reflektiert.

Zwischen dem Trapezprisma 7 und dem Spiegel 9 ist ein Strahlteilerwürfel 8 angeordnet, der einen Teil des von dem Objektiv kommenden Lichts in das an das Bajonett 6 anzusetzende Zusatzgerät hineinspiegelt. Dieser Strahlteiler kann in bekannter Weise mittels einer Handhabe schaltbar ausgebildet sein, so dass in den verschiedenen Schaltstellungen alles Licht vom Objektiv entweder zum Beobachter, zu dem anzusetzenden Zusatzgerät oder beispielsweise im Verhältnis 30:70 geteilt sowohl zum Betrachter als auch zum Zusatzgerät gelenkt wird. In der letztgenannten Schaltstellung ist auch der auf der gegenüberliegenden Seite des Tubusteils 1 angeordnete Eingang in den Strahlengang eingekoppelt.

Im Inneren des Auslegers 2 ist ein Linsenhalter 10 angeordnet, der eine Feldlinse und eine Blende trägt. An dieser Stelle entsteht ein Zwischenbild des beobachteten Objekts. Dieses Zwischenbild wird von einem in den beiden Tuben 11 und 15 gefassten telezentrischen Linsensystem nochmals abgebildet. Das zweite Zwischenbild entsteht im Okulartubus 5 nach zweimaliger Umlenkung über die Spiegel 13 und 33, deren Reflexionsfläche wie die des Spiegels 9 jeweils in den Drehachsen 21 und 26 der Gelenke 23 und 34 des Tragarms 3 liegen. Aufgrund der zweifachen Ausbildung und der genannten vier Reflexionen sieht der Betrachter ein aufrechtes, seitenrichtiges Bild, das Manipulationen am Objekt erleichtert.

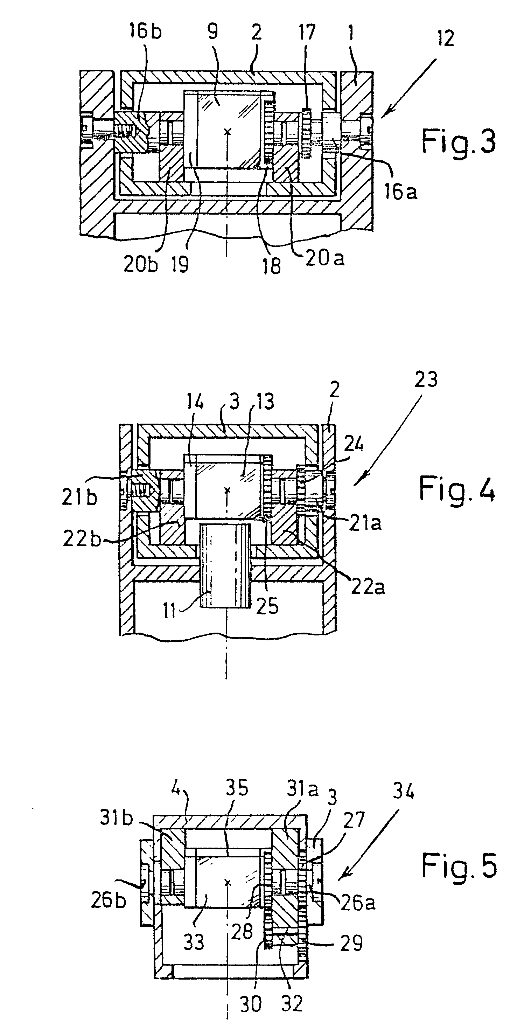

Beim Verschwenken der Tubusteile 2-4 um die drei Gelenke 12, 23 und 34 bewegen sich die in den Gelenkachsen angeordneten Spiegel 9, 13 und 33 nur jeweils um den halben Schwenkwinkel, damit die Bildlage im Tubus konstant bleibt. Erreicht wird dies durch den in den Fig. 3-5 näher gezeigten Aufbau der Gelenke:

Das Gelenk 12 besteht aus zwei an gegenüberliegenden Seitenteilen des feststehenden Tubusteils 1 angeschraubten Bolzen 16a und 16b, die drehbeweglich in entsprechenden Bohrungen zweier mit dem Ausleger 2 verbundener Böcke 20a und 20b gelagert sind. Der Bolzen 16a trägt ein feststehendes Ritzel 17. Zwischen den Böcken 20a und 20b und koaxial zu den Bolzen 16a und 16b ist ein U-förmiger Spiegelträger 19 gelagert, der den Spiegel 9 und ein zweites Ritzel 18 trägt. Die beiden Ritzel 17 und 18 kämmen mit zwei in diesem Schnitt nicht sichtbaren, auf einer gemeinsamen Achse gelagerten Gegenritzeln. Dabei ist das Übersetzungsverhältnis gerade so gewählt, dass beim Verschwenken des Auslegers 2 der Spiegel 9 diese Bewegung nur mit der halben Winkelgeschwindigkeit mitmacht.

Das Gelenk 23 besitzt den gleichen Aufbau wie das Gelenk 12 abgesehen von der in Richtung der Achse 21 notwendigerweise gedrungeneren Formgebung. So ist der Tragarm 3 mit zwei an ihm befestigten Böcken 22a und 22b wieder drehbar um zwei an gegenüberliegenden Seiten des Auslegers 2 befestigten Bolzen 21a und 21b gelagert. In den gleichen Böcken 22 ist auch der Halter 14 des Spiegels 13 drehbeweglich gelagert. Wieder sind je ein Ritzel 24 fest mit dem Bolzen 21a am Ausleger 2 und ein zweites Ritzel 25 mit dem Halter 14 des Spiegels 13 verbunden und kämmen mit entsprechenden, auch hier nicht sichtbaren Gegenritzeln im Tragarm 3.

Bei dem in Fig. 5 dargestellten Gelenk ist das vollständige Reduziergetriebe für den Halter 35 des Spiegels 33 sichtbar. Auch hier dienen zwei mit durchgängiger Bohrung versehene Böcke 31a und 31b im Okularansatz 4 zur Lagerung des Spiegelhalters 35 und gleichzeitig zur Lagerung des Okularansatzes 4 gegenüber dem Tragarm 3. Aus Platzgründen sind das feststehende Ritzel 27 auf dem Bolzen 26a des Tragarms 3 und sein Gegenritzel 29 in der Ebene der Wandung des Okularansatzes 4 angeordnet. Das über die Welle 32 mit dem Ritzel 29 verbundene Ritzel 30 kämmt mit dem am Spiegelträger 35 befestigten Ritzel 28.

Der Okulartubus 5 des in den Fig. 1-5 dargestellten Instruments lässt sich gegen die in den Gelenken 12, 23 und 34 auftretende Reibung frei nach Höhe und Tiefe und in seinem Einblickwinkel verstellen. Zur Begrenzung der Schwenkbewegung sind Anschläge vorgesehen und zur Einstellung der Reibungskraft dienen Klemmschrauben, die beide aus Gründen einer vereinfachten Darstellung der Erfindung in den Zeichnungen weggelassen sind.

Diese Einstellbewegungen sind voneinander unabhängig, d.h. Höhe und Tiefe der Okulare lassen sich über die Gelenke 12 und 23 einstellen ohne dass sich damit zwangsläufig ein bestimmter Einblickwinkel ergibt, da dieser ja separat mit Hilfe des Gelenks 34 einstellbar ist.

**Patentansprüche**

1. Mikroskoptubus mit einem ersten Gelenk (12) zur Einstellung der Höhe bzw. des Einblickwinkels des Okularansatzes (4), dadurch gekennzeichnet, dass der Tubus (1-4) einen kranartigen Aufbau besitzt mit einem im wesentlichen waagerechten bzw. leicht gegen die Horizontale geneigten Ausleger (2), der um das erste, zur Höhenverstellung dienende Gelenk (12) schwenkbar ist, dass ein im wesentlichen senkrecht bzw. leicht gegen die Vertikale geneigter Tragarm (3) um ein zweites, zur Tiefenverstellung dienendes Gelenk (23) schwenkbar am Ausleger (2) befestigt ist, dessen Achse (21; 26) parallel zur Achse (16) des ersten Gelenks (12) angeordnet und im wesentlichen um die Länge des Auslegers (2) gegenüber dem ersten Gelenk (12) versetzt ist und der im Tubus (1-4) geführte Strahlengang über beide Gelenke (23; 34) gefaltet ist.

2. Mikroskoptubus nach Anspruch 1, dadurch gekennzeichnet, dass der Okularansatz (4) des Mikroskoptubus um ein drittes Gelenk (34) schwenkbar am Tragarm (3) befestigt ist.

3. Mikroskoptubus nach Anspruch 1 oder 2, dadurch gekennzeichnet, dass am feststehenden Teil (1) des Tubus ein Ansatz (6) für ein Zusatzgerät angebracht ist.

4. Mikroskoptubus nach einem der Ansprüche 1 bis 3, dadurch gekennzeichnet, dass der Strahlengang im Tubus (1-4) über Spiegel (9; 13; 33) geführt ist, die drehbar gelagert und jeweils mit einem Getriebe (17, 18; 24, 25; 27-30) zur Reduzierung der Schwenkbewegung um den halben Winkel gekoppelt sind.

5. Mikroskoptubus nach einem der Ansprüche 1 bis 4, dadurch gekennzeichnet, dass der Tubus (1 bis 4) eine zwischenabbildende Optik (11, 15) enthält.

6. Mikroskoptubus nach einem der Ansprüche 2 bis 5, dadurch gekennzeichnet, dass die drei Gelenke (12, 23, 34) über ein parallelogrammförmiges Lenkergetriebe miteinander verbunden sind.

## Claims

1. A microscope tube having a first hinge (12) for adjusting the height or angle of observation of the eyepiece attachment (4), characterized by the fact that the tube (1-4) has a crane-like construction with an extension arm (2) which is substantially horizontal or inclined slightly to the horizontal and can be swung about said first hinge (12) which serves for the adjustment in height, that a carrier arm (3) which is substantially vertical or inclined slightly to the vertical is swingably fastened to the extension arm (2) about a second hinge (23) which serves for the displacement in depth, whose axis (21; 26) is parallel to the axis (16) of the first hinge (12) and which is arranged at a distance from said first hinge (12) which is substantially equal to the length of the extension arm (2) and that the ray path guided within the tube (1-4) is bent about both hinges (23; 34).

2. A microscope tube according to Claim 1, characterized by the fact that the eyepiece attachment (4) of the miscroscope tube is fastened to the carrier arm (3) swingably around a third hinge (34).

3. A microscope tube according to Claims 1 or 2, characterized by the fact that an attachment (6) for an auxiliary unit is arranged on the stationary part (1) of the tube.

4. A microscope tube according to one of the Claims 1 to 3, characterized by the fact that the ray path is guided within the tube (1-4) by mirrors (9; 13; 33) which are turnably mounted and each of which is coupled with a transmission (17, 18; 24, 25; 27 to 30) for reduction of the swinging movement by half the angle.

5. A microscope tube according to one of the Claims 1 to 4, characterized by the fact that the tube (1-4) contains an optical system (11, 15) which forms an intermediate image.

6. A microscope tube according to one of the Claims 2 to 5, characterized by the fact that the three hinges (12, 23, 34) are connected to each other by a parallelogram-like link transmission.

## Revendications

1. Tube microscopique muni d'une première articulation (12) pour le réglage de la hauteur ou de l'angle d'inclinaison de l'embase oculaire (4), caractérisé par le fait que le tube (1-4) est conçu en forme de grue et muni d'un bras en porte-à-faux (2) quasiment horizontal ou bien légèrement incliné par rapport à l'horizontale qui peut pivoter autour de la première articulation (12) qui sert au réglage en hauteur, et par le fait qu'un bras-porteur (3) quasiment vertical ou bien légèrement incliné par rapport à la verticale, est fixé sur le bras en porte-à-faux (2) de façon à ce qu'il pivote autour d'une deuxième articulation (23) qui sert au réglage en profondeur, l'axe (21; 26) dudit bras en porte-à-faux étant parallèle à l'axe (16) de la première articulation (12) et décalé par rapport à la première articulation (12) d'une longueur à peu près égale à celle dudit bras en porte-à-faux (2) jusqu'à la première articulation (12) et enfin par le fait que le faisceau lumineux qui traverse le tube (1-4) est dévié par chacune des deux articulations (23; 34).

2. Tube microscopique selon revendication 1, caractérisé par le fait que l'embase oculaire (4) du tube microscopique est fixée au bras-porteur (3) de façon à ce qu'il pivote autour d'une troisième articulation (34).

3. Tube microscopique selon revendication 1 ou 2, caractérisé par le fait que la partie immobile (1) du tube est munie d'une embase (6) pouvant recevoir un accessoire.

4. Tube microscopique selon l'une des revendications 1 à 3, caractérisé par le fait que le faisceau lumineux passe par des miroirs (9; 13; 33) dans le tube (1-4) qui sont orientables par rotation et accouplés à des engrenages (12, 18; 24, 25; 27-30) pour réduire le mouvement de basculement de la moitié de l'angle.

5. Tube microscopique selon l'une des revendications 1 à 4, caractérisé par le fait que le tube (1-4) contient une optique intercalée (11, 15).

6. Tube microscopique selon l'une des revendications 2 à 5, caractérisé par le fait que les trois articulations (12, 23, 34) sont reliées par un mécanisme de commande en parallélogramme.

Fig.1

0 122 385

Fig.2

0 122 385

Fig.3

Fig.4

Fig.5